# EUROPÄISCHE PATENTSCHRIFT

(11) **EP 3 883 121 B1**
(45) Veröffentlichungstag und Bekanntmachung des Hinweises auf die Patenterteilung: **31.01.2024**
(21) Anmeldenummer: 21158179.8
(22) Anmeldetag: 19.02.2021
(51) Int. Cl.: H02P 21/04, H02P 6/24, H02P 6/18, H02P 21/18, H02P 21/36

(54) **HAUSHALTSGERÄT UND VERFAHREN ZUM BETREIBEN EINES HAUSHALTSGERÄTES**
DOMESTIC APPLIANCE AND METHOD FOR OPERATING SAME
APPAREIL ÉLECTROMÉNAGER ET PROCÉDÉ DE FONCTIONNEMENT D'UN APPAREIL ÉLECTROMÉNAGER

(30) Priorität: 18.03.2020 DE 102020203488
(43) Veröffentlichungstag der Anmeldung: 22.09.2021
(73) Patentinhaber: BSH Hausgeräte GmbH, 81739 München (DE)
(72) Erfinder: Hoser, Markus, 89344 Aislingen (DE); Klein, Moritz, 89537 Giengen (DE); Mayer, Roman, 86666 Burgheim (DE); Paulduro, Achim, 89129 Langenau (DE)

(56) Entgegenhaltungen:
- EP-A1- 2 892 148
- EP-A1- 3 288 175
- CN-A- 102 647 145
- DE-A1-102014 217 006
- US-A1- 2015 084 575
- US-A1- 2015 381 090

## Beschreibung

Die Erfindung betrifft ein Verfahren zum Betreiben eines Haushaltsgerätes, das einen feldorientiert geregelten elektrischen Antrieb umfasst, und ein entsprechendes Haushaltsgerät.

Die DE 10 2017 211 217 A1 offenbart ein Haushaltskältegerät, das einen Kältemittelkreislauf mit einem Verdichter und einen drehzahlgeregelten elektrischen Antrieb aufweist. Die Reglung des elektrischen Antriebs ist eine feldorientierte Regelung und der elektrische Antrieb umfasst einen Umrichter und einen dem Umrichter nachgeschalteten permanenterregten Drehstromsynchronmotor, der Teil des Verdichters ist oder vorgesehen ist, den Verdichter anzutreiben. Das Haushaltkältegerät ist eingerichtet ist, den Umrichter derart anzusteuern, dass bei eingeschaltetem Verdichter die Drehzahl des Drehstromsynchronmotors aufgrund eines Ansteuerns durch den Umrichter zumindest in etwa gleich einer vorgegebenen Drehzahl ist, den Umrichter derart anzusteuern um den eingeschalteten Verdichter abzuschalten, dass sich die Drehzahl des Drehstromsynchronmotors verringert, bis die Drehzahl eine vorgegebene Minimaldrehzahl erreicht, und danach den Umrichter derart anzusteuern, dass der Drehstromsynchronmotor für wenigstens eine vorgegebene Zeitdauer abgeschaltet ist.

Die DE 10 2008 029 910 A1 offenbart eine Haushaltsgeschirrspülmaschine, die eine Pumpe und einen feldorientiert geregelten elektrischen Antrieb aufweist. Der elektrische Antrieb umfasst einen Umrichter und einen dem Umrichter nachgeschalteten permanenterregten Drehstromsynchronmotor, der die Pumpe antreibt.

Beispielsweise aus der DE 10 2016 210 443 A1 oder der DE 10 2017 213 069 A1 ist es bekannt, der Versorgungsspannung eines Drehstromsynchronmotors eine hochfrequente Spannung zu überlagern, welche einen entsprechenden, überlagerten hochfrequenten Anteil der Strangströme des Drehstrommotors bewirkt., um die Winkelposition des Rotors relativ zum Stator des Drehstrommotors zu bestimmen.

Die CN 102 647145 A offenbart ein Verfahren zur Steuerung eines Kältegeräts mit einem Gleichstrom (DC)-Motor mit Frequenzumrichter. Für zwei Drehzahlbereiche werden Positionsschätzmethoden für eine Rotorposition angegeben.

Die US 2015/084575 A1 beschreibt eine Motorreglerarchitektur mit einer Motorsteuerung, die eine Funktion zur Abschätzung des niedrigen Drehzahlbetriebs des Motors durch Auswertung der Antwort auf ein in den Regelkreis der Reglerarchitektur injiziertes periodisches Erregersignal beinhaltet.

Aus der US 2015/381090 A1 ist ein Verfahren zur Bestimmung elektrischer Winkel von Elektromotoren bei Null- und niedrigen Drehzahlen ohne Verwendung von Winkelsensoren bekannt.

Die EP 3 288175 A1 stellt ein Verfahren zur adaptiven sensorlosen Positionsbestimmung eines PMSM Motors vor, wobei zwischen Rotorpositionsbestimmung mittels kontinuierlicher Signalinjektion und Rotorpositionsbestimmung mittels Gegen-EMK mittels einer Motorsteuerung in Abhängigkeit von der Drehzahl umgeschaltet wird.

Aufgabe der Erfindung ist es, ein verbessertes Verfahren zum Betreiben eines Haushaltsgerätes anzugeben, das einen drehzahlgeregelten elektrischen Antrieb aufweist, dessen Reglung eine feldorientierte Regelung und dessen Motor ein permanenterregten Drehstromsynchronmotor ist, der Teil einer Komponente des Haushaltsgerätes ist oder vorgesehen ist, diese Komponente anzutreiben.

Die Aufgabe der Erfindung wird gelöst durch ein Verfahren zum Betreiben eines Haushaltsgerätes, das eine Komponente und einen geregelten elektrischen Antrieb aufweist, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen ist, diese Komponente anzutreiben, aufweisend folgende Verfahrensschritte:
während einer Betriebsphase des elektrischen Antriebs, drehzahlgeregeltes Betreiben des geregelten elektrischen Antriebs mittels der feldorientierte Regelung und in Abhängigkeit einer mittels der Längs- und Querströme und eines mathematischen Modells des Drehstromsynchronmotors ermittelten Winkelposition des Rotors relativ zum Stator, und
während einer der Betriebsphase nachfolgenden Bremsphase des elektrischen Antriebs ,
   - Verringern der Drehzahl des Drehstromsynchronmotors durch drehzahlgeregeltes Betreiben des geregelten elektrischen Antriebs mittels der feldorientierten Regelung und in Abhängigkeit einer mittels der Längs- und Querströme und eines mathematischen Modells des Drehstromsynchronmotors ermittelten Winkelposition des Rotors relativ zum Stator, bis die Drehzahl eine vorbestimmte Grenzdrehzahl erreicht,
   - Überlagern einer von dem Stellglied erzeugten und zum Betreiben des Drehstromsynchronmotors vorgesehenen Versorgungsspannung mit einer hochfrequenten Spannung, wodurch Strangströme und die Längs- und Querströme des Drehstromsynchronmotors entsprechende hochfrequente Stromanteile aufweisen,
   - Ermitteln hochfrequente Stromanteile der Längs- und Querströme,
   - Ermitteln der Winkelposition des Rotors relativ zum Stator in Abhängigkeit der hochfrequenten Stromanteile der Längs- und Querströme,
   - weiteres Verringern der Drehzahl des Drehstromsynchronmotors durch drehzahlgeregeltes Betreiben des geregelten elektrischen Antriebs mittels der feldorientierten Regelung und in Abhängigkeit der mittels der hochfrequenten Stromanteile der Längs- und Querströme ermittelten Winkelposition des Rotors relativ zum Stator,
      wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
      wobei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
   - dabei diskretes Messen der Längs- und Querströme zumindest während der Bremsphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
   - Ermitteln der hochfrequenten Stromanteile der Längs- und Querströme durch Differenzbilden der gemessenen entsprechenden Ströme zweier hintereinander folgender Messungen.

Ein weiterer Aspekt der Erfindung betrifft ein Haushaltsgerät, aufweisend eine Komponente und einen geregelten elektrischen Antrieb, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen ist, diese Komponente anzutreiben, und das Haushaltsgerät ausgebildet ist, das erfindungsgemäße Verfahren durchzuführen.

Ein weiterer Aspekt der Erfindung betrifft ein Haushaltsgerät, aufweisend eine Komponente und einen geregelten elektrischen Antrieb, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen ist, diese Komponente anzutreiben, und das Haushaltsgerät ausgebildet ist,
während einer Betriebsphase des elektrischen Antriebs, den geregelten elektrischen Antriebs mittels der feldorientierte Regelung und in Abhängigkeit einer mittels der Längs- und Querströme und eines mathematischen Modells des Drehstromsynchronmotors ermittelten Winkelposition des Rotors relativ zum Stator drehzahlgeregelt zu betreiben, und
während einer der Betriebsphase nachfolgenden Bremsphase des elektrischen Antriebs,
   - die Drehzahl des Drehstromsynchronmotors durch drehzahlgeregeltes Betreiben des geregelten elektrischen Antriebs mittels der feldorientierten Regelung und in Abhängigkeit einer mittels der Längs- und Querströme und eines mathematischen Modells des Drehstromsynchronmotors ermittelten Winkelposition des Rotors relativ zum Stator zu verringern, bis die Drehzahl eine vorbestimmte Grenzdrehzahl erreicht,
   - eine von dem Stellglied erzeugten und zum Betreiben des Drehstromsynchronmotors vorgesehenen Versorgungsspannung mit einer hochfrequenten Spannung zu überlagern, wodurch Strangströme und somit die , Längs- und Querströme des Drehstromsynchronmotors entsprechende hochfrequente Stromanteile aufweisen
   - die hochfrequenten Stromanteile der Längs- und Querströme zu ermitteln,
   - die Winkelposition des Rotors relativ zum Stator in Abhängigkeit der hochfrequenten Stromanteile der Längs- und Querströme zu ermitteln,
   - die Drehzahl des Drehstromsynchronmotors durch drehzahlgeregeltes Betreiben des geregelten elektrischen Antriebs mittels der feldorientierten Regelung und in Abhängigkeit der mittels der hochfrequenten Stromanteile der Längs- und Querströme ermittelten Winkelposition des Rotors relativ zum Stator zu verringern,
      wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
      wobei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
   - dabei diskretes Messen der Längs- und Querströme zumindest während der Bremsphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
   - Ermitteln der hochfrequenten Stromanteile der Längs- und Querströme durch Differenzbilden der gemessenen entsprechenden Ströme zweier hintereinander folgender Messungen.

Das Haushaltsgerät umfasst den geregelten elektrischen Antrieb, dessen Motor ein permanent erregter Drehstromsynchronmotor ist. Der permanenterregte Drehstromsynchronmotor ist z.B. ein bürstenloser Gleichstrommotor.

Der elektrische Antrieb umfasst außerdem das Stellglied, welches den Drehstromsynchronmotor ansteuert, d.h. den Drehstromsynchronmotor mit der Versorgungsspannung versorgt. Die Versorgungsspannung ist eine dreiphasige Spannung, deren Grundfrequenz durch die Drehzahlregelung und der gewünschten Soll-Drehzahl eingestellt wird.

Das Stellglied ist insbesondere ein Umrichter, der vorzugsweise mittels pulsweiten Modulation betrieben wird.

Die Regelung des geregelten elektrischen Antriebs steuert das Stellglied bzw. den Umrichter an und ist eine feldorientierte Regelung. Eine feldorientierte Regelung bildet üblicherweise eine Kaskadenstruktur mit innenliegenden Stromregelkreisen, denen ein äußerer Drehzahlregelkreis überlagert ist. Die feldorientierte Regelung umfasst somit eine Kaskadenstruktur mit einem einen Stromregler aufweisenden innenliegenden Stromregelkreis, dem ein äußerer Drehzahlregelkreis überlagert ist. Der Stromregler ist insbesondere ein PI-Regler, also vorzugsweise ein Regler mit einem Proportional- und einem Integralanteil.

Die feldorientierte Regelung ist eine diskrete Regelung. Die Takt- bzw. Regelfrequenz der diskreten feldorientierten Regelung und somit des Stromreglers ist vorzugsweise größer als 1kHz, z.B. 4kHz.

Für die feldorientierte Regelung ist es nötig, die Winkelposition des Rotors relativ zum Stator des Drehstromsynchronmotors zu kennen. Um die Winkelposition sensorlos bzw. ohne einen Geber zu ermitteln, kann die Winkelposition in Abhängigkeit der sogenannten und dem Fachmann im Prinzip bekannten Längs- und Querströme, die aus den Strangströmen des Drehstromsynchronmotor berechnet werden können, und einem mathematischen Modells des Drehstromsynchronmotors, das auch als Beobachter bezeichnet wird, ermitteln. Die Winkelposition des Rotors relativ zum Stator wird somit insbesondere sensorlos ermittelt.

Bei einer relativ geringen Drehzahl des Drehstromsynchronmotors kann es jedoch sein, dass ein Auswerten dieser Ströme kein zuverlässiges Ermitteln der Winkelposition des Rotors ermöglicht. Deshalb wird erfindungsgemäß während der Bremsphase des elektrischen Antriebs insbesondere bis zum Stillstand die von dem Stellglied erzeugte und zum Betreiben des Drehstromsynchronmotors vorgesehene Versorgungsspannung vorzugsweise erst ab dem Erreichen der Grenzdrehzahl mit der hochfrequenten Spannung überlagert, wodurch die Strangströme des Drehstromsynchronmotors entsprechende hochfrequente Stromanteile aufweisen. Dies wird im Englischen als "high frequncy injection (HFI)" bezeichnet. Dadurch weisen die Längs- und Querströme entsprechende hochfrequente Stromanteile auf. Aufgrund dieser hochfrequenten Stromanteile ist es dann möglich, auch bei relativ niedrigen Drehzahlen eine für die feldorientierte Regelung nötige Winkelposition des Rotors sensorlos zu ermitteln, und somit während der Bremsphase die Drehzahl des Drehstromsynchronmotors durch drehzahlgeregeltes Betreiben des geregelten elektrischen Antriebs mittels der feldorientierten Regelung und in Abhängigkeit der mittels der hochfrequenten Stromanteile der Längs- und Querströme ermittelten Winkelposition des Rotors relativ zum Stator zu erniedrigen, bis der Drehstromsynchronmotor gestoppt ist.

Aufgrund dieser hochfrequenten Stromanteile ist es ggf. sogar möglich, beim Stillstand des Drehstromsynchronmotors die Winkelposition des Rotors sensorlos zu ermitteln.

Die Grenzdrehzahl liegt vorzugsweise zwischen 600 und 1400 Umdrehungen pro Minute, insbesondere um 1000 Umdrehungen pro Minute.

Die hochfrequente Spannung und somit die hochfrequenten Stromanteile weisen vorzugsweise eine Frequenz von größer als 1 kHz, vorzugsweise von größer als 2 kHz auf.

Während der der Bremsphase vorhergehenden Betriebsphase wird der geregelte elektrische Antrieb drehzahlgeregelt mittels der feldorientierten Regelung und in Abhängigkeit einer mittels der Längs- und Querströme und des mathematischen Modells des Drehstromsynchronmotors ermittelten Winkelposition des Rotors relativ zum Stator betrieben, d.h. die Winkelposition des Rotors wird während der Betriebsphase in Abhängigkeit der den Drehstromsynchronmotor antreibenden Längs- und Querströme und des mathematischen Modells des Drehstromsynchronmotors ermittelt.

Vorzugsweise wird die vom Stellglied erzeugte und zum Betreiben des Drehstromsynchronmotors vorgesehene Versorgungsspannung lediglich nach dem Erreichen der Grenzfrequenz mit der hochfrequenten Spannung überlagert, d.h. vorzugsweise wird das Stellglied während der Betriebsphase und dem Teil der Bremsphase bis zum Erreichen der Grenzfrequenz ohne der überlagerten hochfrequenten Spannung betrieben. Dies kann sich positiv auf den Energieverbrauch des elektrischen Antriebs und somit des Haushaltsgerätes auswirken.

Nach einer bevorzugten Ausführungsform des erfindungsgemäßen Verfahrens umfasst dieses ein Erzeugen eines Ansteuersignals für das Stellglied durch Überlagern des vom Stromregler erzeugten, der Versorgungspannung zugeordneten Signals mit einem der hochfrequenten Spannung zugeordneten Signal. Das erfindungsgemäße Haushaltsgerät ist somit vorzugsweise eingerichtet, ein Ansteuersignal für das Stellglied zu erzeugen, durch ein Überlagern eines vom Stromregler erzeugten, der Versorgungsspannung zugeordneten Signals mit einem der hochfrequenten Spannung zugeordneten Signal. Diese beiden Signale können in relativ einfacher weise addiert werden, wodurch in relativ einfacher weise das Steuerglied aufgrund des Ansteuersignals die mit der hochfrequenten Spannung überlagerte Versorgungsspannung für den Drehstromsynchronmotor erzeugen kann.

Bei der feldorientierten Regelung werden die Strangströme des Drehstrommotors in Längs- und Querströme transformiert. Die Längs- und Querströme werden für den Stromregekreis verwendet, um daraus ein der Versorgungsspannung zugeordnetes Signal zum Ansteuern des Stellglieds zu erhalten. Dem Längsstrom und dem Querstrom sind jeweils ein Stromregler zugeordnet. Vorzugsweise wird das der hochfrequenten Spannung zugeordnete Signal lediglich dem von dem Längsstrom zugeordneten Stromregler erzeugten Signals überlagert.

Bei der feldorientierten Regelung kann es vorgesehen sein, dass der Soll-Wert des Längsstroms gleich Null ist. Vorzugsweise ist die feldorientierte Regelung nach dem sogenannten maximum torque per ampere Prinzip, um insbesondere bei unterschiedlich großen Längs- und Querinduktivitäten des Drehstromsynchronmotors den Energieverbrauch des elektrischen Antriebs und somit des Haushaltsgerätes zu verringern. In diesem Fall wird nicht der Sollwert des Längsstroms zu Null oder auf einen festen Wert gesetzt, sondern u.a. aufgrund einer Beziehung zwischen den Längs- und Querinduktivitäten und aufgrund des vom äußeren Drehzahlregelkreises ermittelten Signals, das dem vom Drehstromsynchronmotor aufzubringenden Drehmoment zugeordnet ist, ermittelt. Da diese genannte Beziehung eine nichtlineare ist, werden die Sollwerte des Längs- und des Querstroms vorzugsweise in einer Look-up Tabelle hinterlegt.

Das der hochfrequenten Spannung zugeordnete Signal kann z.B. sinusförmig sein. Vorzugsweise ist es rechteckförmig.

Im Falle der diskreten feldorientierten Regelung wird vorzugsweise der Stromregler mit einer Reglerfrequenz betrieben, die gleich der Frequenz der hochfrequenten Spannung bzw. des der hochfrequenten Spannung zugeordneten Signals ist. Insbesondere kann es auch vorgesehen sein, dass die Frequenz der hochfrequenten Spannung bzw. des der hochfrequenten Spannung zugeordneten Signals ein ganzzahliges Vielfaches der Reglerfrequenz ist.

Um die hochfrequenten Stromanteile der Längs- und Querströme in relativ einfacher weise zu erhalten, weist das erfindungsgemäße Verfahren ein diskretes Messen der Längs- und Querströme zumindest während der

Bremsphase mit der doppelten Frequenz der Frequenz der hochfrequenten Spannung auf, wobei die Messungen derart getaktet sind, dass bei zwei hintereinander erfolgten Messungen eine der Messungen beim Maximum und die andere Messung beim Minimum der gemessenen Ströme erfolgen. Das erfindungsgemäße Haushaltsgerät ist somit derart ausgebildet, dass es die Längs- und Querströme zumindest während der Bremsphase mit der doppelten Frequenz der Frequenz der hochfrequenten Spannung misst, wobei die Messungen derart getaktet sind, dass bei zwei hintereinander erfolgten Messungen eine der Messungen beim Maximum und die andere Messung beim Minimum der gemessenen Ströme erfolgen. Dann können die hochfrequenten Stromanteile der Längs- und Querströme durch Differenzbilden der gemessenen entsprechenden Ströme zweier hintereinander folgender Messungen ermittelt werden.

Das Haushaltsgerät ist z.B. eine Haushaltswaschmaschine mit einer drehbar gelagerten Wäschetrommel als die vom elektrischen Antrieb angetriebene Komponente.

Das Haushaltsgerät ist z.B. eine Haushaltsgeschirrspülmaschine mit einer Laugenpumpe als der Komponente.

Vorzugsweise ist die Komponente ein Verdichter, der eine Verdichterkammer umfasst und zum Verdichten eines Fluids vorgesehen ist.

Ein Beispiel eines Haushaltsgerätes mit einem Verdichter, ist ein Haushaltswäschetrockner, der einen den Verdichter umfassenden Wärmepumpenkreislauf und den geregelten elektrischen Antrieb umfasst.

Ein weiteres Beispiel eines Haushaltsgerätes mit einem Verdichter ist ein Haushaltskältegerät, das einen wärmeisolierten Korpus mit einem kühlbaren Innenbehälter, der einen zum Lagern von Lebensmitteln vorgesehenen kühlbaren Innenraum begrenzt, einen zum Kühlen des kühlbaren Innenraums vorgesehenen Kältemittelkreislauf mit einem Kühlmittel als das Fluid und dem Verdichter, und den geregelten elektrischen Antrieb umfasst.

Das als Haushaltskältegerät umfasst den wärmeisolierten Korpus mit dem Innenbehälter, der den kühlbaren Innenraum begrenzt. Der kühlbare Innenraum ist zum Lagern von Lebensmitteln vorgesehen und wird mittels des Kältemittelkreislaufs gekühlt.

Der kühlbare Innenraum kann vorzugsweise mittels eines Türblatts verschlossen werden. Das Türblatt ist vorzugsweise bezüglich einer Achse, die vorzugsweise vertikal verläuft, schwenkbar gelagert. Im geöffneten Zustand ist der kühlbare Innenraum zugänglich.

Der Kältemittelkreislauf als solcher ist dem Fachmann im Prinzip bekannt und umfasst den Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Vorzugsweise umfasst die Verdichterkammer des Verdichters einen Einlass und einen Auslass, einen innerhalb der Verdichterkammer verschieblich gelagerten Kolben und eine Kurbelwelle. In diesem Fall ist der Rotor des Drehstromsynchronmotors über die Kurbelwelle mit dem Kolben gekoppelt, sodass im Betrieb des Verdichters der Kolben mittels des Drehstromsynchronmotors ein von der Verdichterkammer und dem Kolben eingeschlossenes Volumen zum Verdichten des Fluids zu verkleinern vermag, wobei in einer bestimmten Position des Kolbens relativ zur Verdichterkammer das Volumen minimal und in einer weiteren bestimmten Position des Kolbens relativ zur Verdichterkammer das Volumen maximal ist. Ein solcher Verdichter wird üblicherweise als Hubkolben-Verdichter bezeichnet. Bevorzugt kann dann das Stellglied zum Ende der Bremsphase derart angesteuert werden, dass dieser für den Stillstand des Drehstromsynchronmotors weg von der bestimmten Position zum Stillstand kommt.

Im Betrieb des Verdichters und im Falle des Haushaltskältegerätes wird der Drehstromsynchronmotor insbesondere mit einer z.B. von einer elektronischen Steuervorrichtung oder einer Temperaturregelung des Haushaltskältegerätes ermittelten bzw. vorgegebenen Drehzahl betrieben.

Hubkolben-Verdichter weisen eine charakteristische Drehmomentkurve auf. Diese kann in Abhängigkeit vom Lastpunkt, aber auch von der Drehzahl des Drehstromsynchronmotors abhängen. Auch mechanische Gegebenheiten des Verdichters, wie z.B. ein Trägheitsmoment rotierenden Bestandteile des Verdichters können, eine Auswirkung auf den Betrieb des Drehstromsynchronmotors haben.

In einer bestimmten Position des Kolbens relativ zur Verdichterkammer ist das Volumen minimal. Diese bestimmte Position wird üblicherweise als oberer Totpunkt bezeichnet.

In einer weiteren bestimmten Position des Kolbens relativ zur Verdichterkammer ist das Volumen maximal. Diese weitere bestimmte Position wird üblicherweise als unterer Totpunkt bezeichnet.

Bewegt der Drehstromsynchronmotor den Kolben von seiner bestimmten Position, d.h. von seinem oberen Totpunkt, in seine weitere bestimmte Position, d.h. in seinen unteren Totpunkt, so erhöht sich das Volumen und der Verdichter saugt das Fluid durch seinen Einlass ein.

Bewegt der Drehstromsynchronmotor den Kolben von seiner weiteren bestimmten Position, d.h. von seinem unteren Totpunkt, in seine bestimmte Position, d.h. in seinen oberen Totpunkt, so verringert sich das Volumen und der Verdichter verdichtet das in der Verdichterkammer befindliche Fluid, bis sich der Auslass am oberen Totpunkt öffnet, damit das verdichtete Fluid zum Verflüssiger gelangen kann.

Ausführungsbeispiele der Erfindung sind exemplarisch in den beigefügten schematischen Zeichnungen dargestellt. Es zeigen:
- Fig. 1: ein Haushaltskältegerät in einer perspektivischen Darstellung,
- Fig. 2: einen, einen Verdichter aufweisenden Kältemittelkreislauf des Haushaltskältegerätes,
- Fig. 3: den Verdichter,
- Fig. 4: einen feldorientiert geregelten elektrischen Antrieb des Haushaltskältegerätes,
- Fig. 5: die Struktur der feldorientierten Regelung des feldorientiert geregelten elektrischen Antriebs,
- Fig. 6: ein hochfrequentes Signal,
- Fig. 7: ein Ansteuersignal für einen Umrichter des feldorientiert geregelten elektrischen Antrieb,
- Fig. 8: einen Duty-Cycle,
- Fig. 9: einen Längsstrom, der einen hochfrequenten Stromanteil umfasst,
- Fig. 10: eine alternative Struktur der feldorientierten Regelung, und
- Fig. 11: einen Haushaltswäschetrockner.

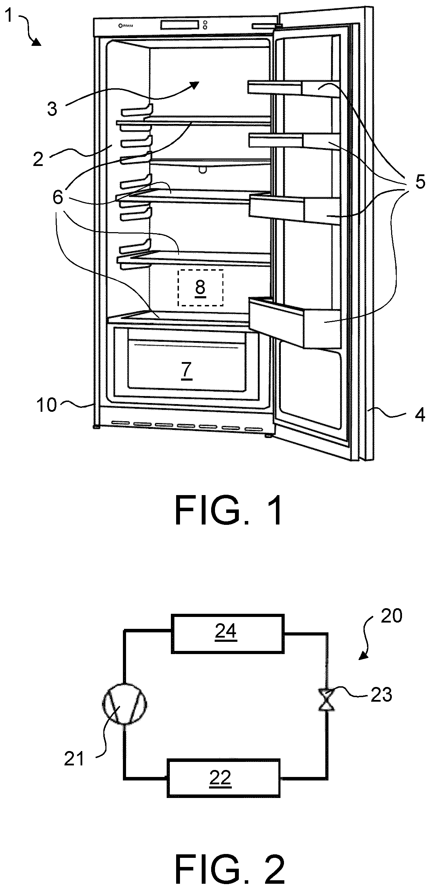

Die Fig. 1 zeigt in einer perspektivischen Darstellung ein Haushaltskältegerät 1 als Beispiel eines Haushaltsgerätes, das eine Komponente und einen geregelten elektrischen Antrieb aufweist, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen, diese Komponente anzutreiben.

Das Haushaltskältegerät 1 umfasst insbesondere einen wärmeisolierten Korpus 10 mit einem Innenbehälter 2, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskältegerät 1 umfasst einen in der Fig. 2 gezeigten Kältemittelkreislauf 20 zum Kühlen des kühlbaren Innenraums 3. Im Falle des vorliegenden Ausführungsbeispiels umfasst der Kältemittelkreislauf 20 ein nicht näher dargestelltes, dem Fachmann im Prinzip jedoch bekanntes Kältemittel, einen Verdichter 21, einen dem Verdichter 21 nachgeschalteten Verflüssiger 22, eine dem Verflüssiger 22 nachgeschaltete Drosselvorrichtung 23, die insbesondere als ein Drossel- oder Kapillarrohr ausgeführt ist, und einen Verdampfer 24, der zwischen der Drosselvorrichtung 23 und dem Verdichter 21 angeordnet ist. Der Verdichter 21 ist vorzugsweise innerhalb eines Maschineraums des Haushaltkältegerätes 1 angeordnet, der sich insbesondere hinter der Schublade 7 befindet.

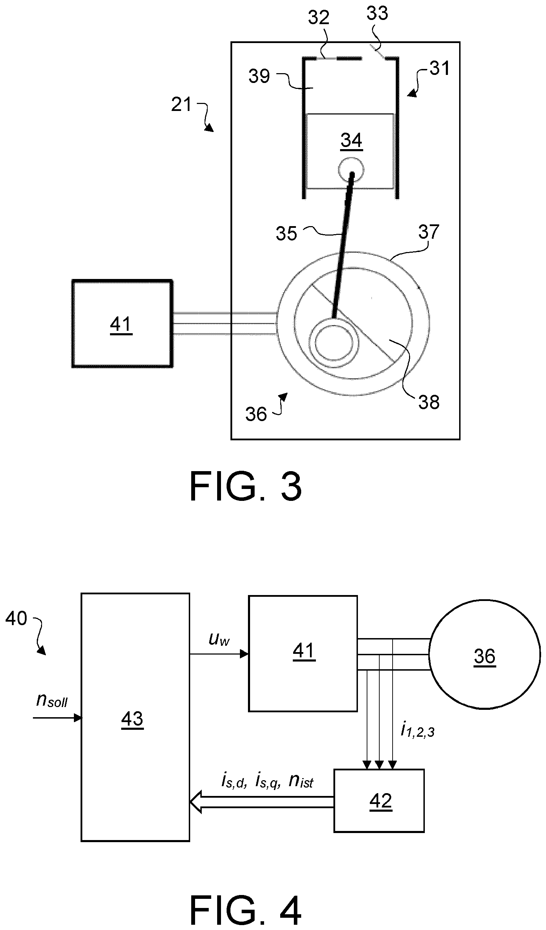

Der Verdichter 21 ist als ein Hubkolbenverdichter ausgeführt und in der Fig. 3 näher dargestellt.

Der Verdichter 21 umfasst eine Verdichterkammer 31 mit einem Einlass 32 und mit einem Auslass 33 für das Kältemittel, und einen innerhalb der Verdichterkammer 31 verschieblich gelagerten Kolben 34. Der Einlass 33 und der Auslass 33 sind jeweils mit entsprechenden Ventilen versehen, wie dies dem Fachmann im Prinzip bekannt ist.

Der Verdichter 21 umfasst eine Kurbelwelle 35 und einen Drehstromsynchronmotor 36. Der Verdichter 21 ist ein Beispiel der obenstehend genannten Komponente.

Der Drehstromsynchronmotor 36 ist insbesondere ein permanenterregter Drehstromsynchronmotor, vorzugsweise ein bürstenloser Gleichstrommotor, und umfasst einen Stator 37 und einen relativ zum Stator 37 drehbar gelagerten Rotor 38. Eines der Enden der Kurbelwelle 35 ist mit dem Kolben 34 und das andere Ende der Kurbelwelle 35 ist mit dem Rotor 38 des Drehstromsynchronmotors 36 gekoppelt, sodass im bestimmungsgemäßen Betrieb des Haushalskältegerätes 1 bzw. des Verdichters 21 der Kolben 34 mittels des Drehstromsynchronmotors 36 ein von der Verdichterkammer 31 und dem Kolben 34 eingeschlossenes Volumen 39 zum Verdichten des Kühlmittels zu verkleinern vermag.

Das Haushaltskältegerät 1 umfasst im Falle des vorliegenden Ausführungsbeispiels eine elektronische Steuervorrichtung 8, die eingerichtet ist, den Kältemittelkreislauf 20, insbesondere den Verdichter 21 des Kältemittelkreislaufs 20 derart anzusteuern, dass der kühlbare Innenraum 3 zumindest in etwa eine vorgegebene oder vorgebbare Soll-Temperatur aufweist. Die elektronische Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der elektronischen Steuervorrichtung 8 verbundenen Temperatursensor aufweisen.

Um den Kältemittelkreislauf 20 anzusteuern bzw. zu regeln, umfasst das Haushaltskältegerät 1 im Falle des vorliegenden Ausführungsbeispiels einen in der Fig. 4 gezeigten feldorientiert geregelten elektrischen Antrieb 40, welcher den Drehstromsynchronmotor 36 des Verdichters 21 aufweist. Bei Bedarf wird der Drehstromsynchronmotor 36 entsprechend einer von der elektronischen Steuervorrichtung 8 vorgegebenen Soll-Drehzahl *nₛₒₗₗ* angetrieben. Die Soll-Drehzahl *nₛₒₗₗ* wird insbesondere von der elektronischen Steuervorrichtung 8 aufgrund einer beabsichtigten Kühlung des kühlbaren Innenraums 3 berechnet bzw. vorgegeben, beispielsweise aufgrund der aktuellen Temperatur und der Soll-Temperatur des kühlbaren Innenraums 3.

Insbesondere weist der Drehstromsynchronmotor 36 eine Längsinduktivität *L_{d}* und eine Querinduktivität *L_{q}* auf, die sich im Falle des vorliegenden Ausführungsbeispiels unterscheiden. Im Falle des vorliegenden Ausführungsbeispielswurden die Kennfelder für die Längsinduktivität *L_{d}* und die Querinduktivität *L_{q}* vermessen

Der elektrische Antrieb 40 umfasst ein Stellglied zum Antreiben des Drehstromsynchronmotors 36. Das Stellglied ist als Umrichter 41 ausgeführt und erzeugt im Betrieb des elektrischen Antriebs 40 eine dreiphasige Versorgungsspannung, deren Grundschwingung eine Amplitude und eine Grundfrequenz f aufweist, die indirekt abhängig von der Soll-Drehzahl *nₛₒₗₗ* und einer Ist-Drehzahl *nᵢₛₜ* des Drehstromsynchronmotors 36 ist.

Im Falle des vorliegenden Ausführungsbeispiels weist der feldorientiert geregelte elektrische Antrieb 40 eine Messvorrichtung 42 auf, mittels derer die elektrischen Strangströme *i_{1,2,3}* des Drehstromsynchronmotors 36 gemessen werden und die Ist-Drehzahl des Drehstromsynchronmotors 36 sensorlos ermittelt wird. Die Messvorrichtung 42 ist auch vorgesehen, aus den Strangströme *i_{1,2,3}* transformierte Quer- und Längsströme *i_{q}, i_{d}* zu errechnen, wie dies dem Fachmann im Prinzip geläufig ist. Aus den Quer- und Längsströme *i_{q}, i_{d}* und einem mathematischen Modell des Drehstrommotors 36 kann die Ist-Drehzahl *nᵢₛₜ* des Drehstromsynchronmotors 36 errechnet werden, wie es dem Fachmann im Prinzip geläufig ist.

Im Falle des vorliegenden Ausführungsbeispiels weist der feldorientiert geregelte elektrische Antrieb 40 eine feldorientierte Regelung 43 auf, die den Umrichter 41 ansteuert.

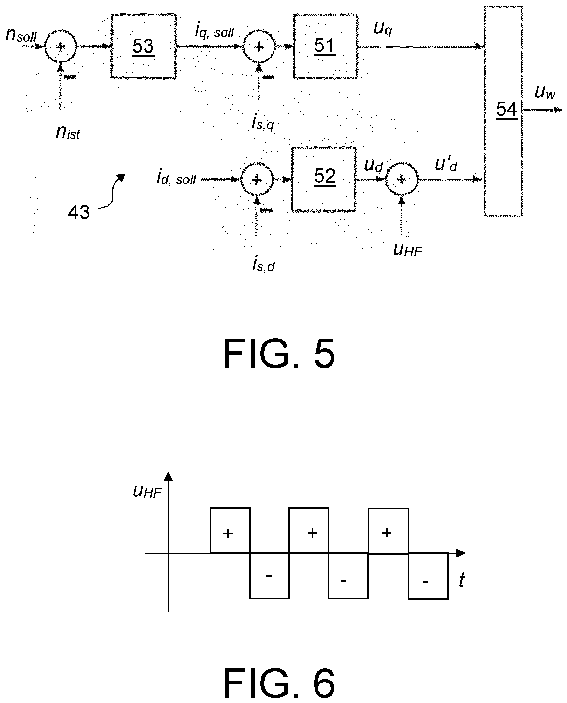

Die feldorientierte Regelung 43 bildet eine Kaskadenstruktur mit innenliegenden Stromregelkreisen, denen ein äußerer Drehzahlregelkreis überlagert ist, wie dies dem Fachmann im Prinzip geläufig ist. Die Fig. 5 zeigt teilweise diese Struktur.

Für die feldorientierte Regelung ergibt sich eine Regelstruktur, bei der die transformierten Quer- und Längsströme *i_{q}, i_{d}* mittels der Stromregelkreise geregelt werden. Im Falle des vorliegenden Ausführungsbeispiels umfassen die Stromregelkreise vorzugsweise einen ersten Stromregler 51 für den Querstrom *i_{q}* und einen zweiten Stromregler 52 für den Längsstrom *i_{d}*. Die beiden Stromregler 51, 52 sind insbesondere PI-Regler.

Die feldorientierte Regelung 43 bzw. die Messvorrichtung 42 ist im Falle des vorliegenden Ausführungsbeispiels derart ausgeführt, dass sie die Strangströme *i_{1,2,3}* des Drehstromsynchronmotors 36 in auf den Rotor des Drehstromsynchronmotors 36 bezogene rotorfeste Längs- und Querstrom-Ist-Werte *i_{s,d}, i_{s,q}* transformiert. Die Abweichung zwischen dem Sollwert *i_{q,soll}* des Querstroms *i_{q}* und dem Querstroms-Ist-Wert *i_{s,q}* ist das Eingangssignal für den ersten Stromregler 51, und die Abweichung zwischen dem Längsstrom-Sollwert *i_{d,soll}* und dem Längsstrom-Ist-Wert *i_{s,d}* ist das Eingangssignal für den zweiten Stromregler 52.

Die Ausgangssignale *u_{q}, u_{d}* der beiden Stromregler 51, 52 entsprechen transformierten elektrischen Spannungen, welche mittels einer dem Fachmann im Prinzip bekannten Transformation 54 in zum Ansteuern des Umrichters 41 geeignete Signale *u_{w}* transformiert werden.

Der Querstrom-Sollwert *i_{q,soll}* ergibt sich im Falle des vorliegenden Ausführungsbeispiels aufgrund dieses äußeren Drehzahlregelkreises, welcher einen Regler 53 aufweist und welcher abhängig von der Soll-Drehzahl *nₛₒₗₗ* und der Ist-Drehzahl *nᵢₛₜ* berechnet wird. Der Regler 53 ist insbesondere ein PI-Regler.

Im Falle des vorliegenden Ausführungsbeispiels ist der Längsstrom-Sollwert *i_{d,soll}* gleich Null.

Die feldorientierte Regelung 43 ist im Falle des vorliegenden Ausführungsbeispiels eine diskrete feldorientierte Regelung 43. Die Takt- bzw Regelfrequenz der diskreten feldorientierten Regelung 43 und somit der beiden Stromregler 51, 52 ist beispielsweise 4kHz.

Für die feldorientierte Regelung 43 ist es nötig, die Winkelposition des Rotors 38 relativ zum Stator 37 des Drehstromsynchronmotors 36 zu kennen. Die Winkelposition wird sensorlos bzw. ohne einen Geber ermittelt.

Während einer Betriebsphase wird der feldorientierte geregelte elektrische Antrieb 40 drehzahlgeregelt mittels der feldorientierten Regelung 43 und in Abhängigkeit einer mittels der Längs- und Querströme Ist-Werte *i_{s,d}, i_{s,q}* und des mathematischen Modells ermittelten Winkelposition des Rotors relativ zum Stator betrieben. Während der Betriebsphase beträgt die Drehzahl des Drehstromsynchronmotors 36 z.B. mehr als 1000 Umdrehungen pro Minute.

Im Falle des vorliegenden Ausführungsbeispiels wird während einer der Betriebsphase nachfolgenden Bremsphase des Verdichters 21 zunächst die Drehzahl des Drehstromsynchronmotors 36 durch drehzahlgeregeltes Betreiben des geregelten elektrischen Antriebs 40 mittels der feldorientierten Regelung 43 und in Abhängigkeit einer mittels der Längs- und Querströme und des mathematischen Modells des Drehstromsynchronmotors 36 ermittelten Winkelposition des Rotors 38 relativ zum Stator 37 verringert, bis die Drehzahl eine vorbestimmte Grenzdrehzahl erreicht. Die Grenzdrehzahl ist kleiner als die Drehzahl während der Betriebsphase und beträgt z.B. 1000 Umdrehungen pro Minute.

Bei Erreichen der Grenzdrehzahl wird das Ausgangssignal *u_{d}* des zweiten Stromreglers 52 mit einem hochfrequenten Signal *u_{HF}* überlagert, woraus ein Signal *u'_{d}* entsteht, sodass während der restlichen Bremsphase des Verdichters das zum Ansteuern des Umrichters 41 vorgesehene Signal *u_{w}* ebenfalls eine Information über das hochfrequente Signal *u_{HF}* aufweist. Dadurch weist die für den Drehstromsynchronmotor 36 vorgesehenen Versorgungsspannung ebenfalls einen hochfrequenten Spannungsanteil auf, wodurch die Strangströme *i_{1,2,3}* und die Längs- und Querstrom-Ist-Werte *i_{s,d}, i_{s,q}* entsprechende hochfrequente Stromanteile aufweisen.

Während der Betriebsphase wird der Versorgungsspannung kein hochfrequenter Anteil überlagert.

Während der Bremsphase des feldorientiert geregelten elektrischen Antriebs 40 insbesondere bis zum Stillstand weisen die Längs- und Querströme Ist-Werte *i_{s,d}, i_{s,q}* die hochfrequenten Stromanteile auf. Aufgrund dieser hochfrequenten Stromanteile ist es dann möglich, auch bei relativ niedrigen Drehzahlen eine für die feldorientierte Regelung nötige Winkelposition des Rotors 38 zu ermitteln, und somit während der Bremsphase die Drehzahl des Drehstromsynchronmotors 36 durch drehzahlgeregeltes Betreiben des geregelten elektrischen Antriebs 43 mittels der feldorientierten Regelung 43 und in Abhängigkeit der mittels der hochfrequenten Stromanteile der Längs- und Querströme Ist-Werte *i_{s,d}, i_{s,q}* ermittelten Winkelposition des Rotors 38 relativ zum Stator 37 bis zum Stillstand zu verringern.

Im Falle des vorläufigen Ausführungsbeispiels ist das der hochfrequenten Spannung zugeordnete Signal (hochfrequente Signal *u_{HF}*) rechteckförmig und weist eine Frequenz gleich der Reglerfrequenz der feldorientierten Regelung 43 auf, ist also im Falle des vorliegenden Ausführungsbeispiels 4kHz.

Die beiden Stromregler 51, 52 laufen u.a. in einem Takt, der der Reglerfrequenz von insbesondere 4kHz zugeordnet ist. Der Verlauf des rechteckförmige hochfrequenten Signals *u_{HF}* ist in der Fig. 6 gezeigt und weist insbesondere eine Spannung von ± 10 V auf.

Das pulsweitenmodulierte Signal für den Umrichter 41 läuft z.B. in einem Takt entsprechend 8 kHz.

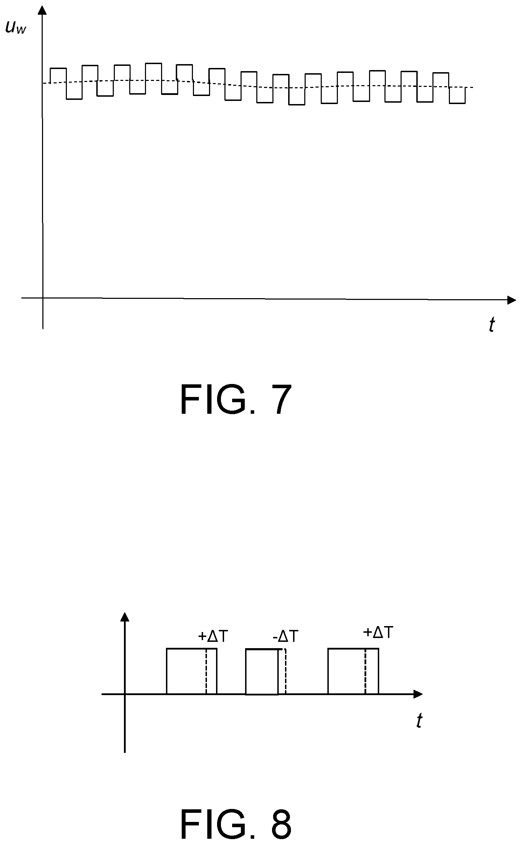

Insbesondere wird das der hochfrequenten Spannung zugeordnete Signal (hochfrequentes Signal *u_{HF}*) abwechselnd auf das Ausgangssignal *u_{d}* des zweiten Stromreglers 52 addiert und subtrahiert. Die Fig. 7 zeigt den Verlauf des zum Ansteuern des Umrichters 41 vorgesehenen Signal *u_{w}*. Der Vorteil liegt darin, dass die Demodulation damit vereinfacht wird. Bei dem vorgestellten Vorgehen können die unterschiedlichsten Muster eingeprägt werden. Die Amplitude des der hochfrequenten Spannung zugeordneten Signals (hochfrequentes Signal *u_{HF}*) wurde durch Versuche ermittelt.

Wird dieses Muster in den Duty-Cycle umgerechnet, ergibt sich eine Änderung der Duty-Cycle Längen entsprechend der Fig. 8. Je nachdem, ob durch die hochfrequente Überlagerung das Muster positiv oder negativ geändert wurde, wird der Duty-Cyle um ein ΔT verlängert oder verkürzt. Die Stromregler "sehen" davon nichts, da der Mittelwert identisch ist (bezogen auf 4kHz).

Im Falle des vorläufigen Ausführungsbeispiels werden die hochfrequenten Stromanteile der Längs- und Querströme erhalten, indem die Messvorrichtung 42 ein diskrete Messung mit einer Frequenz durchführt, die doppelt so groß ist wie die Frequenz des hochfrequenten Signals *u_{HF}.*

Die entsprechende Messungen sind derart getaktet, dass bei zwei hintereinander erfolgten Messungen eine der Messungen beim Maximum und die andere Messung beim Minimum der gemessenen Ströme erfolgt. Dann können die hochfrequenten Stromanteile der Längs- und Querströme durch Differenzbilden der gemessenen entsprechenden Ströme zweier hintereinander folgender Messungen ermittelt werden.

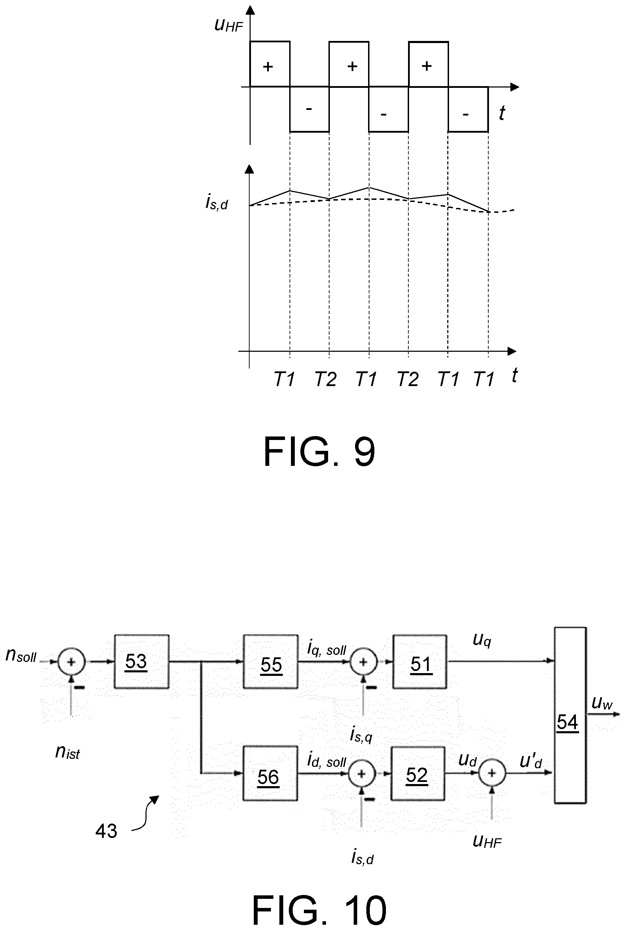

Insbesondere werden im Falle des vorliegenden Ausführungsbeispiels die Strangströme *i_{1,2,3}* im 8kHz-Takt gemessen. Die Strangströme *i_{1,2,3}* werden über eine dem Fachmann bekannte Transformation nach in die Längs- und Querströme Ist-Werte *i_{s,d}, i_{s,q}* transformiert. Die Längs- und Querströme weisen ebenfalls hochfrequente Stromanteile auf. Die Fig. 9 zeigt den Verlauf des Längsquerstroms.

Die Längs- und Querströme weisen z.B. jeweils einen hochfrequenten Stromanteil und einen Gleichanteil auf. Da mit doppelter Reglerfrequenz gemessen wird, liegen pro Reglertakt für die Längs- und Querströme jeweils zwei Messungen vor.

Wie bereits erläutert, gilt bei zwei hintereinander erfolgten Messungen, dass eine der Messungen beim Maximum (jeweils bei T1 in der Fig. 9) und die andere Messung beim Minimum (jeweils bei T2 in der Fig. 9) der gemessenen Ströme erfolgt. Dann können die hochfrequenten Stromanteile der Längs- und Querströme durch Differenzbilden der gemessenen entsprechenden Ströme zweier hintereinander folgender Messungen ermittelt werden. Die bei T2 erfolgte Messung wird für die Stromregelung verwendet. Aufgrund der Kennfelder der Längs- und Querinduktivitäten kann dadurch die Winkelposition des Rotors während der Bremsphase ermittelt werden.

Im Falle des vorliegenden Ausführungsbeispiels ist es noch vorgesehen, den Umrichter 41 am Ende der Bremsphase derart anzusteuern, dass dieser für den Stillstand den Kolben 34 weg von der bestimmten Position bewegt.

Die Fig. 10 zeigt eine alternative Struktur des feldorientierten Regelung 43, die auf dem sogenannten maximum torque per ampere Prinzip beruht. Bei diesem Prinzip wird der Längsstrom-Sollwert *i_{d,soll}* nicht auf Null gesetzt, sondern wie der Querstrom-Sollwert *i_{q,son}* durch den äußeren Drehzahlregelkreis bestimmt. Das von äußeren Drehzahlregelkreis erzeugte Signal liegt am Ausgang de Reglers 53 an und ist dem von Drehstromsynchronmotor 36 aufzubringenden Drehmoment zugeordnet.

Zusätzlich weist die in der Fig. 10 gezeigte Struktur einen ersten Funktionsblock 55 und einen zweiten Funktionsblock 56 auf. Der erste Funktionsblock 55 befindet sich zwischen dem Ausgang des Reglers 53 des äußeren Drehzahlregelkreises und der Differenzbildung aus dem Querstrom-Sollwert *i_{q,soll}* und des Querstrom-Ist-Werts *i_{s,q}*. Der zweite Funktionsblock 56 befindet sich zwischen dem Ausgang des Reglers 53 des äußeren Drehzahlregelkreises und der Differenzbildung aus dem Längsstrom-Sollwert *i_{d,soll}* und des Querstrom-Ist-Werts *i_{d,q}.*

Der Längsstrom-Sollwert *i_{d,soll}* und der Querstrom-Sollwert *i_{q,soll}* werden u.a. aufgrund einer Beziehung zwischen den Längs- und Querinduktivitäten und aufgrund des vom äußeren Drehzahlregelkreises ermittelten Signals ermittelt. Da diese genannte Beziehung eine nichtlineare ist, werden der Längsstrom-Sollwert *i_{d,soll}* und der Querstrom-Sollwert *i_{q,soll}* vorzugsweise mittels einer in den Funktionsblöcken 55, 56 hinterlegten Look-up Tabelle ermittelt.

Somit ist das Ausgangssignal des ersten Funktionsblocks 55 der Querstrom-Ist-Wert *i_{s,q}* und das Ausgangssignal des zweiten Funktionsblocks 56 ist der Längs-Ist-Wert *i_{s,d}.*

Die Funktionen der beiden Funktionsblöcke 55, 56 ergeben sich aus den Kennlinienfelder der Längs- und Querinduktivitäten *L_{d}, L_{q}* und sind z.B. in einer Look-up Tabelle gespeichert.

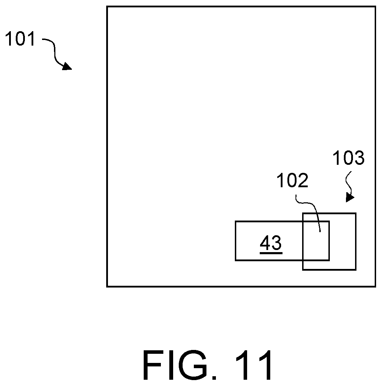

Die Fig. 11 zeigt als ein weiteres Beispiel eines Haushaltsgerätes einen Haushaltswäschetrockner 101, der einen entsprechenden feldorientiert geregelten elektrischen Antrieb 43 aufweist, dessen Drehstromsynchronmotor Teil eines Verdichter 102 ist oder vorgesehen ist, den Verdichter 102 anzutreiben. Der Verdichter 102 ist Teil eines Wärmepumpenkreislaufs 103.

### BEZUGSZEICHENLISTE

- 1: Haushaltskältegerät
- 2: Innenbehälter
- 3: kühlbarer Innenraum
- 4: Türblatt
- 5: Türabsteller
- 6: Fachböden
- 7: Schublade
- 8: elektronische Steuervorrichtung
- 10: Korpus
- 20: Kältemittelkreislauf
- 21: Verdichter
- 22: Verflüssiger
- 23: Drosselvorrichtung
- 24: Verdampfer
- 31: Verdichterkammer
- 32: Einlass
- 33: Auslass
- 34: Kolben
- 35: Kurbelwelle
- 36: Drehstromsynchronmotor
- 37: Stator
- 38: Rotor
- 39: Volumen
- 40: elektrischer Antrieb
- 41: Umrichter
- 42: Messvorrichtung
- 43: feldorientierte Regelung
- 51: erster Stromregler
- 52: zweiter Stromregler
- 53: Regler
- 54: Transformation
- 55: erster Funktionsblock
- 56: zweiter Funktionsblock
- 101: Haushaltswäschetrockner
- 102: Verdichter
- 103: Wärmepumpenkreislauf
- *i_{1,2,3}*: Strangströme
- *nₛₒₗₗ*: Soll-Drehzahl
- *nᵢₛₜ*: Ist-Drehzahl
- *i_{s,d}*: Längsstrom-Ist-Wert
- *i_{s,q}*: Querstrom-Ist-Wert
- *i_{d,soll}*: Längsstrom-Sollwert
- *i_{q,soll}*: Querstrom-Sollwert
- *u_{q}, u_{d}*: Ausgangssignale
- *u_{w}*: Signal
- *u_{HF}*: hochfrequente Signal

## Patentansprüche

1. Verfahren zum Betreiben eines Haushaltsgerätes (1, 101), das eine Komponente (21, 102) und einen geregelten elektrischen Antrieb (40) aufweist, der einen permanenterregten Drehstromsynchronmotor (36), ein insbesondere als Umrichter (41) ausgebildetes Stellglied zum Ansteuern des Drehstromsynchronmotors (36) und eine feldorientierte Regelung (43) zum Ansteuern des Stellglieds aufweist, wobei der Drehstromsynchronmotor (36) einen Stator (37) und einen bezüglich des Stators (37) drehbar gelagerten Rotor (38) umfasst und Teil der Komponente (21, 102) ist oder vorgesehen ist, diese Komponente (21, 102) anzutreiben, aufweisend folgende Verfahrensschritte:
während einer Betriebsphase des elektrischen Antriebs (40), drehzahlgeregeltes Betreiben des geregelten elektrischen Antriebs (40) mittels der feldorientierte Regelung (43) und in Abhängigkeit einer mittels der Längs- und Querströme und eines mathematischen Modells des Drehstromsynchronmotors (36) ermittelten Winkelposition des Rotors (38) relativ zum Stator (37), und
während einer der Betriebsphase nachfolgenden Bremsphase des elektrischen Antriebs (40),
- Verringern der Drehzahl des Drehstromsynchronmotors (36) durch drehzahlgeregeltes Betreiben des geregelten elektrischen Antriebs (40) mittels der feldorientierten Regelung (43) und in Abhängigkeit einer mittels der Längs- und Querströme und eines mathematischen Modells des Drehstromsynchronmotors (36) ermittelten Winkelposition des Rotors (38) relativ zum Stator (37), bis die Drehzahl eine vorbestimmte Grenzdrehzahl erreicht,
- Überlagern einer von dem Stellglied erzeugten und zum Betreiben des Drehstromsynchronmotors (36) vorgesehenen Versorgungsspannung mit einer hochfrequenten Spannung, wodurch Strangströme und die Längs- und Querströme des Drehstromsynchronmotors (36) entsprechende hochfrequente Stromanteile aufweisen,
- Ermitteln hochfrequente Stromanteile der Längs- und Querströme,
- Ermitteln der Winkelposition des Rotors (38) relativ zum Stator (37) in Abhängigkeit der hochfrequenten Stromanteile der Längs- und Querströme, und
- weiteres Verringern der Drehzahl des Drehstromsynchronmotors (36) durch drehzahlgeregeltes Betreiben des geregelten elektrischen Antriebs (40) mittels der feldorientierten Regelung (43) und in Abhängigkeit der mittels der hochfrequenten Stromanteile der Längs- und Querströme ermittelten Winkelposition des Rotors (38) relativ zum Stator (37),
wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
**dadurch gekennzeichnet, dass** dabei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
- dabei diskretes Messen der Längs- und Querströme zumindest während der Bremsphase mit der doppelten Frequenz der Frequenz der hochfrequenten Spannung, wobei die Messungen derart getaktet sind, dass bei zwei hintereinander erfolgenden Messungen eine der Messungen beim Maximum und die andere Messung beim Minimum der gemessenen Ströme erfolgen, und
- Ermitteln der hochfrequenten Stromanteile der Längs- und Querströme durch Differenzbilden der gemessenen entsprechenden Ströme zweier hintereinander folgender Messungen.

2. Verfahren nach Anspruch 1, aufweisend Betreiben des als Umrichter (41) ausgebildeten Stellglieds mittels Pulsweitenmodulation, und/oder aufweisend Betreiben des Stellglieds ohne der überlagerten hochfrequenten Spannung während der Betriebsphase und insbesondere erst ab dem Erreichen der Grenzfrequenz.

3. Verfahren nach Anspruch 1 oder 2, wobei die feldorientierte Regelung (43) nach dem maximum torque per ampere Prinzip ausgelegt ist.

4. Verfahren nach einem der Ansprüche 1 bis 3, wobei die Komponente ein Verdichter (21, 102) ist, der eine Verdichterkammer (31) umfasst und zum Verdichten eines Fluids vorgesehen ist.

5. Verfahren nach Anspruch 4, wobei die Verdichterkammer (31) einen Einlass (32) und einen Auslass (33), einen innerhalb der Verdichterkammer (31) verschieblich gelagerten Kolben (34) und eine Kurbelwelle (35) umfasst, und der Rotor (38) des Drehstromsynchronmotors (36) über die Kurbelwelle (35) mit dem Kolben (34) gekoppelt ist, sodass im Betrieb des Verdichters (21) der Kolben (34) mittels des Drehstromsynchronmotors (36) ein von der Verdichterkammer (31) und dem Kolben (34) eingeschlossenes Volumen (39) zum Verdichten eines Fluids zu verkleinern vermag, wobei in einer bestimmten Position des Kolbens (34) relativ zur Verdichterkammer (31) das Volumen (39) minimal und in einer weiteren bestimmten Position des Kolbens (34) relativ zur Verdichterkammer (31) das Volumen (39) maximal ist, aufweisend Ansteuern des Stellglieds am Ende der Bremsphase derart, dass dieser für den Stillstand des Drehstromsynchronmotors (36) weg von der bestimmten Position zum Stillstand kommt.

6. Verfahren nach Anspruch 4 oder 5, wobei das Haushaltsgerät ein Haushaltskältegerät (1) ist, das einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kühlmittel als das Fluid und dem Verdichter (21), und den geregelten elektrischen Antrieb umfasst.

7. Verfahren nach Anspruch 4 oder 5, wobei das Haushaltsgerät als ein Haushaltswäschetrockner (101) ausgebildet ist, der einen den Verdichter (102) umfassenden Wärmepumpenkreislauf (102) und den geregelten elektrischen Antrieb (40) umfasst.

8. Haushaltsgerät, aufweisend eine Komponente (21, 102) und einen geregelten elektrischen Antrieb (40), der einen permanenterregten Drehstromsynchronmotor (36), ein insbesondere als Umrichter (41) ausgebildetes Stellglied zum Ansteuern des Drehstromsynchronmotors (36) und eine feldorientierte Regelung (43) zum Ansteuern des Stellglieds aufweist, wobei der Drehstromsynchronmotor (36) einen Stator (37) und einen bezüglich des Stators (37) drehbar gelagerten Rotor (38) umfasst und Teil der Komponente (21, 102) ist oder vorgesehen ist, diese Komponente (21, 102) anzutreiben, **dadurch gekennzeichnet, dass** das Haushaltsgerät (1, 101) ausgebildet ist, das Verfahren nach einem der Ansprüche 1 bis 7 durchzuführen und somit ausgebildet ist,
während einer Betriebsphase des elektrischen Antriebs (40), den geregelten elektrischen Antriebs (40) mittels der feldorientierte Regelung (43) und in Abhängigkeit einer mittels der Längs- und Querströme und eines mathematischen Modells des Drehstromsynchronmotors (36) ermittelten Winkelposition des Rotors (38) relativ zum Stator (37) drehzahlgeregelt zu betreiben, und
während einer der Betriebsphase nachfolgenden Bremsphase des elektrischen Antriebs (40),
- die Drehzahl des Drehstromsynchronmotors (36) durch drehzahlgeregeltes Betreiben des geregelten elektrischen Antriebs (40) mittels der feldorientierten Regelung (43) und in Abhängigkeit einer mittels der Längs- und Querströme und eines mathematischen Modells des Drehstromsynchronmotors (36) ermittelten Winkelposition des Rotors (38) relativ zum Stator (37) zu verringern, bis die Drehzahl eine vorbestimmte Grenzdrehzahl erreicht,
- eine von dem Stellglied erzeugten und zum Betreiben des Drehstromsynchronmotors (36) vorgesehenen Versorgungsspannung mit einer hochfrequenten Spannung zu überlagern, wodurch Strangströme und somit die , Längs- und Querströme des Drehstromsynchronmotors (36) entsprechende hochfrequente Stromanteile aufweisen
- die hochfrequenten Stromanteile der Längs- und Querströme zu ermitteln,
- die Winkelposition des Rotors (38) relativ zum Stator (37) in Abhängigkeit der hochfrequenten Stromanteile der Längs- und Querströme zu ermitteln, und
- die Drehzahl des Drehstromsynchronmotors (36) durch drehzahlgeregeltes Betreiben des geregelten elektrischen Antriebs (40) mittels der feldorientierten Regelung (43) und in Abhängigkeit der mittels der hochfrequenten Stromanteile der Längs- und Querströme ermittelten Winkelposition des Rotors (38) relativ zum Stator (37) zu verringern,
wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
wobei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
- dabei diskretes Messen der Längs- und Querströme zumindest während der Bremsphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
- Ermitteln der hochfrequenten Stromanteile der Längs- und Querströme durch Differenzbilden der gemessenen entsprechenden Ströme zweier hintereinander folgender Messungen..

9. Haushaltsgerät nach Anspruch 8, **dadurch gekennzeichnet, dass** die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, und insbesondere dass die feldorientierte Regelung eine diskrete feldorientierte Regelung (43) ist.

10. Haushaltsgerät nach Anspruch 8 oder 9, **dadurch gekennzeichnet, dass** die Komponente ein Verdichter (21, 102) ist, der eine Verdichterkammer (31) umfasst und zum Verdichten eines Fluids vorgesehen ist, wobei die Verdichterkammer (31) einen Einlass (32) und einen Auslass (33), einen innerhalb der Verdichterkammer (31) verschieblich gelagerten Kolben (34) und eine Kurbelwelle (35) umfasst, und der Rotor (38) des Drehstromsynchronmotors (36) über die Kurbelwelle (35) mit dem Kolben (34) gekoppelt ist, sodass im Betrieb des Verdichters (21) der Kolben (34) mittels des Drehstromsynchronmotors (36) ein von der Verdichterkammer (31) und dem Kolben (34) eingeschlossenes Volumen (39) zum Verdichten eines Fluids zu verkleinern vermag, wobei in einer bestimmten Position des Kolbens (34) relativ zur Verdichterkammer (31) das Volumen (39) minimal und in einer weiteren bestimmten Position des Kolbens (34) relativ zur Verdichterkammer (31) das Volumen (39) maximal ist,

11. Haushaltsgerät nach Anspruch 10, **dadurch gekennzeichnet, dass** es ein Haushaltskältegerät (1) ist, das einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kühlmittel als das Fluid und dem Verdichter (21), und den geregelten elektrischen Antrieb (40) umfasst.

12. Haushaltsgerät nach Anspruch 10, **dadurch gekennzeichnet, dass** es ein Haushaltswäschetrockner (101) ist, der einen den Verdichter (102) umfassenden Wärmepumpenkreislauf (103) und den geregelten elektrischen Antrieb (40) umfasst.

## Claims

1. Method for operating a household appliance (1, 101), which has a component (21, 102) and a controlled electrical drive (40), which drive has a permanently excited three-phase synchronous motor (36), an actuator embodied in particular as a converter (41) for activating the three-phase synchronous motor (36) and a field-oriented controller (43) for activating the actuator, wherein the three-phase synchronous motor (36) comprises a stator (37) and a rotor (38) mounted rotatably with respect to the stator (37) and is part of the component (21, 102) or is provided to drive this component (21, 102), having the following method steps:
during an operating phase of the electrical drive (40), speed-controlled operation of the controlled electrical drive (40) by means of the field-oriented controller (43) and as a function of an angular position of the rotor (38), determined by means of the longitudinal and transverse currents and a mathematical model of the three-phase synchronous motor (36), relative to the stator (37), and
during a braking phase of the electrical drive (40) which follows on from the operating phase,
- reducing the speed of the three-phase synchronous motor (36) by speed-controlled operation of the controlled electrical drive (40) by means of the field-oriented controller (43) and as a function of an angular position of the rotor (38), determined by means of the longitudinal and transverse currents and a mathematical model of the three-phase synchronous motor (36), relative to the stator (37), until the speed reaches a predetermined limit speed,
- superimposing a supply voltage produced by the actuator and provided to operate the three-phase synchronous motor (36) with a high-frequency voltage, as a result of which phase currents and the longitudinal and transverse currents of the three-phase synchronous motor (36) have corresponding high-frequency current components,
- determining high-frequency current components of the longitudinal and transverse currents,
- determining the angular position of the rotor (38) relative to the stator (37) as a function of the high-frequency current components of the longitudinal and transverse currents, and
- further reducing the speed of the three-phase synchronous motor (36) by speed-controlled operation of the controlled electrical drive (40) by means of the field-oriented controller (43) and as a function of the angular position of the rotor (38), determined by means of the high-frequency current components of the longitudinal and transverse currents, relative to the stator (37),
wherein the field-oriented controller (43) is embodied with a cascade structure with an internal current control loop having a current controller (51, 52), on which an external speed control loop is superimposed, having generation of a control signal for the actuator by means of superimposing the signal generated by the current controller (52) and assigned to the supply voltage with a signal assigned to the high-frequency voltage,
**characterised in that** here the field-oriented controller (43) is a discrete field-oriented controller and having operation of the current controller (52) with a controller frequency, which is in particular equal to the frequency of the high-frequency voltage and/or wherein the high-frequency voltage is embodied to be rectangular,
- in the process discretely measuring the longitudinal and transverse currents at least during the braking phase with twice the frequency of the frequency of the high-frequency voltage, wherein the measurements are timed so that with two consecutive measurements, one of the measurements takes place at the maximum and the other measurement at the minimum of the measured currents, and
- determining the high-frequency current components of the longitudinal and transverse currents by subtraction of the measured, corresponding currents of two consecutive measurements.

2. Method according to claim 1, having operation of the actuator embodied as a converter (41) by means of pulse width modulation and/or having operation of the actuator without the superimposed high-frequency voltage during the operating phase and in particular only after the limit frequency is reached.

3. Method according to claim 1 or 2, wherein the field-oriented controller (43) is designed according to the maximum torque per ampere principle.

4. Method according to one of claims 1 to 3, wherein the component is a compressor (21, 102), which comprises a compressor chamber (31) and is provided to compress a fluid.

5. Method according to claim 4, wherein the compressor chamber (31) comprises an inlet (32) and an outlet (33), a piston (34) mounted displaceably within the compressor chamber (31) and a crankshaft (35), and the rotor (38) of the three-phase synchronous motor (36) is coupled to the piston (34) by way of the crankshaft (35), so that during operation of the compressor (21), the piston (34) is able to reduce a volume (39) enclosed by the compressor chamber (31) and the piston (34) by means of the three-phase synchronous motor (36) in order to compress a fluid, wherein in one specific position of the piston (34) relative to the compressor chamber (31), the volume (39) is minimal and in a further specific position of the piston (34) relative to the compressor chamber (31), the volume (39) is maximal, having activation of the actuator at the end of the braking phase so that it comes to a standstill away from the specific position for the standstill of the three-phase synchronous motor (36).

6. Method according to claim 4 or 5 wherein the household appliance is a household refrigeration appliance (1), which comprises a heat-insulated carcass (10) with a coolable inner container (2), which delimits a coolable interior space (3) provided to store food, a refrigerant circuit (20), provided to cool the coolable interior space (3), with a coolant as the fluid and with the compressor (21), and the controlled electrical drive.

7. Method according to claim 4 or 5, wherein the household appliance is embodied as a household tumble dryer (101), which comprises a heat pump circuit (102) comprising the compressor (102) and the controlled electrical drive (40).

8. Household appliance having a component (21, 102) and a controlled electrical drive (40), which drive has a permanently excited three-phase synchronous motor (36), an actuator embodied in particular as a converter (41) for activating the three-phase synchronous motor (36) and a field-oriented controller (43) for activating the actuator, wherein the three-phase synchronous motor (36) comprises a stator (37) and a rotor (38) mounted rotatably with respect to the stator (37), and is part of the component (21, 102) or is provided to drive this component (21, 102), **characterised in that** the household appliance (1, 101) is embodied to carry out the method according to one of claims 1 to 7, and is thus embodied,
during an operating phase of the electrical drive (40), to operate the controlled electrical drive (40) in a speed-controlled manner by means of the field-oriented controller (43) and as a function of an angular position of the rotor (38), determined by means of the longitudinal and transverse currents and a mathematical model of the three-phase synchronous motor (36), relative to the stator (37), and
during a braking phase of the electrical drive (40) which follows on from the operating phase,
- to reduce the speed of the three-phase synchronous motor (36) by speed-controlled operation of the controlled electrical drive (40) by means of the field-oriented controller (43) and as a function of an angular position of the rotor (38), determined by means of the longitudinal and transverse currents and a mathematical model of the three-phase synchronous motor (36), relative to the stator (37), until the speed reaches a predetermined limit speed,
- to superimpose a supply voltage produced by the actuator and provided to operate the three-phase synchronous motor (36) with a high-frequency voltage, as a result of which phase currents and thus the longitudinal and transverse currents of the three-phase synchronous motor (36) have corresponding high-frequency current components
- to determine the high-frequency current components of the longitudinal and transverse currents,
- to determine the angular position of the rotor (38) relative to the stator (37) as a function of the high-frequency current components of the longitudinal and transverse currents, and
- to reduce the speed of the three-phase synchronous motor (36) by speed-controlled operation of the controlled electrical drive (40) by means of the field-oriented controller (43) and as a function of the angular position of the rotor (38), determined by means of the high-frequency current components of the longitudinal and transverse currents, relative to the stator (37),
wherein the field-oriented controller (43) is embodied with a cascade structure with an internal current control loop having a current controller (51, 52), on which an external speed control loop is superimposed, having generation of a control signal for the actuator by means of superimposing the signal generated by the current controller (52) and assigned to the supply voltage with a signal assigned to the high-frequency voltage,
wherein the field-oriented controller (43) is a discrete field-oriented controller and having operation of the current controller (52) with a controller frequency, which is in particular equal to the frequency of the high-frequency voltage and/or wherein the high-frequency voltage is embodied to be rectangular,
- in the process discretely measuring the longitudinal and transverse currents at least during the braking phase with twice the frequency of the frequency of the high-frequency voltage, wherein the measurements are timed so that with two consecutive measurements, one of the measurements takes place at the maximum and the other measurement at the minimum of the measured currents, and
- determining the high-frequency current components of the longitudinal and transverse currents by subtraction of the measured, corresponding currents of two consecutive measurements.

9. Household appliance according to claim 8, **characterised in that** the field-oriented controller (43) is embodied with a cascade structure with an internal current control loop having a current controller (51, 52), on which an external speed control loop is superimposed, and in particular that the field-oriented controller is a discrete field-oriented controller (43).

10. Household appliance according to claim 8 or 9, **characterised in that** the component is a compressor (21, 102), which comprises a compressor chamber (31) and is provided to compress a fluid, wherein the compressor chamber (31) comprises an inlet (32) and an outlet (33), a piston (34) mounted displaceably within the compressor chamber (31) and a crankshaft (35), and the rotor (38) of the three-phase synchronous motor (36) is coupled to the piston (34) by way of the crankshaft (35), so that during operation of the compressor (21), the piston (34) is able to reduce a volume (39) enclosed by the compressor chamber (31) and the piston (34) by means of the three-phase synchronous motor (36) in order to compress a fluid, wherein in one specific position of the piston (34) relative to the compressor chamber (31), the volume (39) is minimal and in a further specific position of the piston (34) relative to the compressor chamber (31), the volume is maximal (39).

11. Household appliance according to claim 10, **characterised in that** it is a household refrigeration appliance (1) which comprises a heat-insulated carcass (10) with a coolable inner container (2), which delimits a coolable interior space (3) provided to store food, a refrigerant circuit (20), provided to cool the coolable interior space (3), with a coolant as the fluid and with the compressor (21), and the controlled electrical drive (40).

12. The household appliance according to claim 10, **characterised in that** it is a household tumble dryer (101) which comprises a heat pump circuit (103) comprising the compressor (102), and the controlled electrical drive (40).

## Revendications

1. Procédé de fonctionnement d'un appareil électroménager (1, 101), qui comprend un composant (21, 102) et un entraînement électrique régulé (40), lequel comprend un moteur synchrone triphasé excité de façon permanente (36), un organe de commande conçu en particulier sous forme d'un changeur de fréquence (41) pour exciter le moteur synchrone triphasé (36) et une régulation à flux orienté (43) pour commander l'organe de commande, dans lequel le moteur synchrone triphasé (36) comprend un stator (37) et un rotor (38) monté à rotation par rapport au stator (37) et une partie du composant (21, 102) est destinée ou agencée pour entraîner ce composant (21, 102), le procédé comprenant les étapes suivantes :
pendant une phase de fonctionnement de l'entraînement électrique (40), l'exploitation à un régime régulé de l'entraînement électrique régulé (40) au moyen de la régulation à flux orienté (43) et en fonction d'une position angulaire du rotor (38) par rapport au stator (37) déterminée au moyen des courants longitudinaux et transversaux et d'un modèle mathématique du moteur synchrone triphasé (36), et
pendant une phase de freinage de l'entraînement électrique (40) suivant la phase de fonctionnement,
- la diminution du régime du moteur synchrone triphasé (36) par une exploitation régulée en régime de l'entraînement électrique régulé (40) au moyen de la régulation à flux orienté (43) et en fonction d'une position angulaire du rotor (38) par rapport au stator (37) déterminée au moyen des courants longitudinaux et transversaux et d'un modèle mathématique du moteur synchrone triphasé (36), jusqu'à ce que le régime atteigne un régime limite prédéterminé,
- la superposition d'une tension d'alimentation générée par l'organe de commande et prévue pour faire fonctionner le moteur synchrone triphasé (36) avec une tension à haute fréquence, au moyen de quoi des courants de phase d'enroulement et les courants longitudinaux et transversaux du moteur synchrone triphasé (36) comprennent des fractions de courant à haute fréquence correspondantes,
- la détermination des fractions de courant à haute fréquence des courants longitudinaux et transversaux,
- la détermination de la position angulaire du rotor (38) par rapport au stator (37) en fonction des fractions de courant à haute fréquence des courants longitudinaux et transversaux, et
- la diminution supplémentaire du régime du moteur synchrone triphasé (36) par un actionnement régulé en régime de l'entraînement électrique régulé (40) au moyen de la régulation à flux orienté (43) et en fonction d'une position angulaire du rotor (38) par rapport au stator (37) déterminée au moyen des fractions de courant de haute fréquence des courants longitudinaux et transversaux,
dans lequel la régulation à flux orienté (43) forme une structure en cascade comprenant une boucle de régulation de courant intérieure comportant un régulateur de courant (51, 52), à laquelle une boucle de régulation de régime extérieure est superposée, comprenant la production d'un signal de commande pour l'organe de commande par superposition du signal associé à la tension d'alimentation, généré par le régulateur de courant (52) avec un signal associé à la tension à haute fréquence,
**caractérisé en ce qu'**à cet effet, la régulation à flux orienté (43) est une régulation discrète à flux orienté et comprend l'exploitation du régulateur de courant (52) à une fréquence de régulateur, qui est en particulier égale à la fréquence de la tension à haute fréquence, et/ou dans lequel la tension à haute fréquence est configurée sous une forme rectangulaire,
- la mesure discrète dans ce cadre des courants longitudinaux et transversaux au moins pendant la phase de freinage à la fréquence double de la fréquence de la tension à haute fréquence, dans lequel les mesures sont cadencées de sorte que pour deux mesures effectuées successivement, l'une des mesures est effectuée au maximum et l'autre des mesures est effectuée au minimum des courants mesurés, et
- la détermination des fractions de courant à haute fréquence des courants longitudinaux et transversaux par une différence des courants mesurés correspondants des deux mesures effectuées successivement.

2. Procédé selon la revendication 1, comprenant l'exploitation de l'organe de commande réalisé sous forme d'un changeur de fréquence (41) au moyen d'une modulation par durée d'impulsions, et/ou comprenant l'exploitation de l'organe de commande sans la tension à haute fréquence superposée pendant la phase de fonctionnement et en particulier seulement à partir de l'atteinte de la fréquence limite.

3. Procédé selon la revendication 1 ou 2, dans lequel la régulation à flux orienté (43) est dimensionnée suivant le principe d'un couple maximal par ampère.

4. Procédé selon l'une des revendications 1 à 3, dans lequel le composant est un compresseur (21, 102), qui comprend une chambre de compression (31) et qui est prévu pour comprimer un fluide.

5. Procédé selon la revendication 4, dans lequel la chambre de compression (31) comprend une admission (32) et une sortie (33), un piston (34) monté de façon mobile en translation à l'intérieur de la chambre de compression (31) et un vilebrequin (35), et le rotor (38) du moteur synchrone triphasé (36) est accouplé au piston (34) par le biais du vilebrequin (35), de sorte que, pendant le fonctionnement du compresseur (21), le piston (34) peut réduire un volume (39) enfermé par la chambre de compression (31) et le piston (34) pour comprimer un fluide, au moyen du moteur synchrone triphasé (36),
dans lequel, dans une position déterminée du piston (34) par rapport à la chambre de compression (31), le volume (39) est minimal et dans une autre position déterminée du piston (34) par rapport à la chambre de compression (31), le volume (39) est maximal, comprenant la commande de l'organe de commande à la fin de la phase de freinage, de sorte que ce piston s'immobilise à distance de la position déterminée, pour l'arrêt du moteur synchrone triphasé (36).

6. Procédé selon la revendication 4 ou 5, dans lequel l'appareil électroménager est un appareil frigorifique ménager (1), qui comprend une carrosserie isolée thermiquement (10) comportant une cuve intérieure (2) pouvant être refroidie qui délimite un espace intérieur (3) pouvant être refroidi agencé pour stocker des denrées alimentaires, un circuit de fluide frigorigène (20) agencé pour refroidir l'espace intérieur (3) pouvant être refroidi comprenant un fluide frigorigène à titre de fluide et le compresseur (21), et l'entraînement électrique régulé.

7. Procédé selon la revendication 4 ou 5, dans lequel l'appareil électroménager est réalisé sous forme d'un sèche-linge domestique (101), qui comprend un circuit de pompe à chaleur (102) englobant le compresseur (102) et l'entraînement électrique régulé (40).

8. Appareil électroménager, comprenant un composant (21, 102) et un entraînement électrique régulé (40), lequel comprend un moteur synchrone triphasé excité de façon permanente (36), un organe de commande conçu en particulier sous forme d'un changeur de fréquence (41) pour exciter le moteur synchrone triphasé et une régulation à flux orienté (43) pour commander l'organe de commande,
dans lequel le moteur synchrone triphasé (36) comprend un stator (37) et un rotor (38) monté à rotation par rapport au stator (37) et une partie du composant (21, 102) est destinée ou agencée pour entraîner ce composant (21, 102),
**caractérisé en ce que** l'appareil électroménager (1, 101) est configuré pour exécuter le procédé selon l'une des revendications 1 à 7 et configuré ainsi pour :
pendant une phase de fonctionnement de l'entraînement électrique (40), faire fonctionner l'entraînement électrique régulé (40) à un régime régulé au moyen de la régulation à flux orienté (43) et en fonction d'une position angulaire du rotor (38) par rapport au stator (37) déterminée au moyen des courants longitudinaux et
transversaux et d'un modèle mathématique du moteur synchrone triphasé (36), et
pendant une phase de freinage de l'entraînement électrique (40) suivant la phase de fonctionnement,
- diminuer le régime du moteur synchrone triphasé (36) par une exploitation régulée en régime de l'entraînement électrique régulé (40) au moyen de la régulation à flux orienté (43) et en fonction d'une position angulaire du rotor (38) par rapport au stator (37) déterminée au moyen des courants longitudinaux et transversaux et d'un modèle mathématique du moteur synchrone triphasé (36), jusqu'à ce que le régime atteigne un régime limite prédéterminé,
- superposer une tension d'alimentation générée par l'organe de commande et prévue pour actionner le moteur synchrone triphasé (36) avec une tension à haute fréquence, au moyen de quoi des courants de phase d'enroulement et ainsi les courants longitudinaux et transversaux du moteur synchrone triphasé (36) comprennent des fractions de courant à haute fréquence correspondantes,
- déterminer les fractions de courant à haute fréquence des courants longitudinaux et transversaux,
- déterminer la position angulaire du rotor (38) par rapport au stator (37) en fonction des fractions de courant à haute fréquence des courants longitudinaux et
transversaux, et
- diminuer le régime du moteur synchrone triphasé (36) par une exploitation régulée en régime de l'entraînement électrique régulé (40) au moyen de la régulation à flux orienté (43) et en fonction de la position angulaire du rotor (38) par rapport au stator (37) déterminée au moyen des fractions de courant de haute fréquence des courants longitudinaux et transversaux,
dans lequel la régulation à flux orienté (43) forme une structure en cascade comprenant une boucle de régulation de courant intérieure comportant un régulateur de courant (51, 52), à laquelle une boucle de régulation de régime extérieure est superposée, comprenant la production d'un signal de commande pour l'organe de commande par superposition du signal associé à la tension d'alimentation, généré par le régulateur de courant (52) avec un signal associé à la tension à haute fréquence,
dans lequel la régulation à flux orienté (43) est une régulation discrète à flux orienté et comprend l'exploitation du régulateur de courant (52) à une fréquence de régulateur, qui est en particulier égale à la fréquence de la tension à haute fréquence,
et/ou dans lequel la tension à haute fréquence est configurée sous une forme rectangulaire,
- effectuer une mesure discrète dans ce cadre des courants longitudinaux et transversaux au moins pendant la phase de freinage à la fréquence double de la fréquence de la tension à haute fréquence, dans lequel les mesures sont cadencées de sorte que pour deux mesures effectuées successivement, l'une des mesures est effectuée au maximum et l'autre des mesures est effectuée au minimum des courants mesurés, et
- déterminer les fractions de courant à haute fréquence des courants longitudinaux et transversaux par une différence des courants mesurés correspondants des deux mesures effectuées successivement.

9. Appareil électroménager selon la revendication 8, **caractérisé en ce que** la régulation à flux orienté (43) forme une structure en cascade comprenant une boucle de régulation de courant intérieure comprenant un régulateur de courant (51, 52), à laquelle une boucle de régulation de régime extérieure est superposée, et en particulier **en ce que** la régulation à flux orienté est une régulation discrète à flux orienté (43).

10. Appareil électroménager selon la revendication 8 ou 9, **caractérisé en ce que** le composant est un compresseur (21, 102), qui comprend une chambre de compression (31) et est configuré pour comprimer un fluide, dans lequel :
la chambre de compression (31) comprend une admission (32) et une sortie (33), un piston (34) monté de façon mobile en translation à l'intérieur de la chambre de compression (31) et un vilebrequin (35), et le rotor (38) du moteur synchrone triphasé (36) est accouplé au piston (34) par le biais du vilebrequin (35), de sorte que, pendant le fonctionnement du compresseur (21), le piston (34) peut réduire un volume (39) enfermé par la chambre du compresseur (31) et le piston (34) pour comprimer un fluide, au moyen du moteur synchrone triphasé (36),
dans lequel, dans une position déterminée du piston (34) par rapport à la chambre de compression (31), le volume (39) est minimal et dans une autre position déterminée du piston (34) par rapport à la chambre de compression (31), le volume (39) est maximal.

11. Appareil électroménager selon la revendication 10, **caractérisé en ce qu'**il est un appareil frigorifique ménager (1), qui comprend une carrosserie isolée thermiquement (10) comportant une cuve intérieure (2) pouvant être refroidie qui délimite un espace intérieur (3) pouvant être refroidi agencé pour stocker des denrées alimentaires, un circuit de fluide frigorigène (20) agencé pour refroidir l'espace intérieur (3) pouvant être refroidi comprenant un fluide frigorigène à titre de fluide et le compresseur (21), et l'entraînement électrique régulé (40).

12. Appareil électroménager selon la revendication 10, **caractérisé en ce qu'**il est un sèche-linge domestique (101), qui comprend un circuit de pompe à chaleur (103) englobant le compresseur (102) et l'entraînement électrique régulé (40).
